# EUROPÄISCHE PATENTSCHRIFT

(11) **EP 2 644 432 B1**
(45) Veröffentlichungstag und Bekanntmachung des Hinweises auf die Patenterteilung: **04.05.2016**
(21) Anmeldenummer: 13160669.1
(22) Anmeldetag: 22.03.2013
(51) Int. Cl.: B60L 5/10, B60L 5/36

(54) **Nicht schienengebundenes Fahrzeug**
Vehicle that is not bound to rails
Véhicule ne roulant pas sur rails

(30) Priorität: 30.03.2012 DE 102012205276
(43) Veröffentlichungstag der Anmeldung: 02.10.2013
(73) Patentinhaber: Siemens Aktiengesellschaft, 80333 München (DE)
(72) Erfinder: Francke, Jürgen, 12524 Berlin (DE); Gerstenberg, Frank, 10409 Berlin (DE); Keil, Göran, 12529 Schönefeld (DE)

(56) Entgegenhaltungen:
- DE-A1- 10 256 705
- FR-A1- 2 949 578

## Beschreibung

Die Erfindung bezieht sich auf ein nicht schienengebundenes Fahrzeug nach dem Oberbegriff des Patentanspruches 1.

Es ist hinlänglich bekannt, schienengebundene Fahrzeuge, wie zum Beispiel elektrische Lokomotiven, Züge und Straßenbahnen, zur Traktionsversorgung mit Stromabnehmern auszustatten, die zur Einspeisung elektrischer Energie in das Fahrzeug einen Fahrdraht einer Fahrleitungsanlage beschleifen. Durch die Spurführung der Schienen kann eine definierte Relativlage zwischen Fahrdraht und Schienenfahrzeug eingehalten werden, die im Normalbetrieb eine sichere Aufrechterhaltung eines Schleifkontakts zwischen Stromabnehmer und Fahrdraht ermöglicht. Weit weniger verbreitet ist die externe Energieeinspeisung in elektrisch betriebene Fahrzeuge, die nicht schienengebunden sind.

Die Offenlegungsschrift DE 102 56 705 A1 offenbart als nicht schienengebundenes Fahrzeug nach dem Oberbegriff des Anspruchs 1, einen im Tagebau zum Transport von Erz, Kohle oder Abraum eingesetzten Lastwagen. Zur Versorgung eines Elektromotors des Fahrzeugs sind zwei Pantografen vorhanden, die im Betrieb über Schleifleisten mit Fahrdrähten einer zweipoligen Oberleitung in Kontakt stehen. Damit das Fahrzeug stets nur so gelenkt wird, dass die Schleifleisten die Fahrdrähte nicht verlassen, sind an den Pantografen Sensorleisten angeordnet, die Magnetfeldsensoren tragen. Diese bestimmen die magnetische Feldstärke des vom Strom im Fahrdraht erzeugten Magnetfeldes so genau, dass aus dem gemessenen Feldstärkewert der Abstand des Sensors zum Fahrdraht bestimmt werden kann. Die Information über die Position des Sensors relativ zum Fahrdraht und damit über die Position des Pantografen und damit des gesamten Fahrzeugs zu den Fahrdrähten kann dem Fahrzeugführer mittels einer Anzeigeeinheit mitgeteilt werden, so dass dieser sofort geeignete Lenkbewegungen ausführen kann. Es ist auch möglich, die Informationen der Sensoren einer Steuereinheit für eine automatische Lenkung des Fahrzeuges zuzuführen.

Beim Betriebseinsatz in einem privaten Tagebauareal kommt es vorrangig darauf an, einen Kontaktverlust zwischen Stromabnehmer und Fahrdrähten an sich zu vermeiden.

FR 2 949 578 A1 offenbart ein Verfahren zum Führen eines Fahrzeugs auf einem vordefinierten virtuellen Pfad auf einer Straße relativ zu einer über dieser installierten Oberleitung. Das Fahrzeug weist einen pantographenartigen Stromabnehmer zur Kontaktierung der Fahrdrähte der Oberleitung auf. Ferner weist das Fahrzeug eine Lenkeinrichtung zur Beeinflussung der Bewegungsrichtung des Fahrzeugs auf. Mittels einer fahrzeugseitigen Kameraeinrichtung und einer Winkelmesseinrichtung wird der seitliche Abstand eines Referenzpunktes des Fahrzeugs von der Oberleitung ermittelt. Aus den in einer Speichereinheit hinterlegten Positionsdaten des virtuellen Pfades wird dessen seitlicher Abstand zur Oberleitung berechnet. Aus der Differenz der beiden Abstände wird ein Vergleichswert bestimmt. Die Lenkeinrichtung wird nun derart angesteuert, dass der Vergleichswert einen vorbestimmten Schwellenwert nicht überschreitet.

Der Erfindung liegt demgegenüber die Aufgabe zugrunde, ein gattungsgemäßes Fahrzeug bereitzustellen, das für den Einsatz auf elektrifizierten Fahrspuren im öffentlichen Straßenraum mit den auf mehrspurigen Fahrbahnen herrschenden Verkehrsverhältnissen und zu beachtenden Verkehrsregeln geeignet ist, die Relativlage der Schleifleisten zu den Fahrdrähten derart zu beeinflussen, dass eine dauerhafte und lichtbogenfreie Energieübertragung bei gleichmäßigem Verschleiß der Schleifleisten gewährleistet ist.

Die Aufgabe wird gelöst durch ein gattungsgemäßes Fahrzeug mit den im kennzeichnenden Teil des Patentanspruches 1 angegebenen Merkmalen. Demnach weisen die Erfassungsmittel ein Positionsbestimmungssystem zur Bestimmung einer aktuellen Fahrzeugposition des Fahrzeugs auf der Fahrspur und eine Datenbank mit gespeicherten Fahrdrahtpositionen der Fahrdrähte entlang der Fahrspur auf. Eine hochpräzise Bestimmung der aktuellen Fahrzeugposition, beispielsweise einer Fahrzeugmitte im Bereich des Stromabnehmers, wird durch direkte, indirekte oder kombinierte Positionsmessungen - vorzugsweise mit einer Genauigkeit im Bereich eines Dezimeters - ausgeführt. Die fahrzeugseitig verfügbare Datenbank über die Fahrdrahtpositionen kann durch Planungs- und Errichtungsunternehmen einer Oberleitungsanlage bereitgestellt werden. In der Datenbank sind hochpräzise geografische Positionsdaten der Stützpunkte, der Seitenhalter, der Hänger sowie den geometrischen Verlaufsdaten der Tragseile und Fahrdrähte, insbesondere deren Sehnenverlauf über kurvigen Fahrspuren, deren Zick-zack-Verlauf über geraden Fahrspuren oder deren Anordnung in Parallelfeldern bereitgestellt. Die Erfassungsmittel sind nun dazu ausgebildet, die Relativlage aus der aktuell bestimmten Fahrzeugposition und aus den zugeordneten Fahrdrahtpositionen zu berechnen. Geht man davon aus, dass die Fahrdrähte von Hin- und Rückleiter parallel in einem bekannten Abstand zueinander verlaufen, kann als Fahrdrahtposition die Mittelposition zwischen den beiden Fahrdrähten herangezogen werden. An einem Messquerschnitt längs der Fahrspur wird die Relativlage zwischen Fahrzeug und Fahrdrähten aus der lateralen Differenz der Fahrzeugposition und der Fahrdrahtposition ermittelt. Bei Stromabnehmern mit seitlich nicht verstellbaren Schleifleisten entspricht dies dann auch der Relativlage zwischen Stromabnehmer und Fahrdrähten. In dieser Ausführung ist eine Kontakthaltung zwischen Stromabnehmer und Fahrdrähten im Arbeitsbereich der Schleifleisten bei gleichmäßigem Verschleiß der Schleifleisten im Wesentlichen durch die ohnehin vorhandene Lenkung des Fahrzeugs über das Lenkassistenzsystem möglich. Das Positionsbestimmungssystem weist eine Empfangseinrichtung zum Empfang der von einem fahrzeugexternen Videosystem ermittelten Fahrzeugposition auf. Dabei weist das Videosystem eine Videokamera zur Aufnahme von Videobildern eines auf der Fahrspur fahrenden Fahrzeugs und eine Auswertungseinrichtung zur Bestimmung einer Bildposition eines charakteristischen Fahrzeugmerkmals in einem Videobild auf. Die Auswertungseinrichtung ist dabei dazu ausgebildet, aus Standort und Aufnahmerichtung der Videokamera sowie aus Aufnahmezeitpunkten und bestimmten Bildpositionen des charakteristischen Fahrzeugmerkmals die aktuelle Fahrzeugposition und/oder dessen Fahrtrichtung zu ermitteln. Diese Möglichkeit der Fahrzeugpositionsbestimmung bietet sich insbesondere im Bereich von Einfahrten in die Fahrspur, um eine genaue Anfangs- oder Referenzposition zu gewinnen, kann aber auch auf längeren Streckenabschnitten zwischen Einfahrten eingesetzt werden. Eine seitlich oder über der Fahrspur an genau bekanntem Standort und mit genau bekannter Aufnahmerichtung angeordnete Videokamera nimmt Videobilder eines passierenden Fahrzeugs auf und erkennt, ob es sich bei dem Fahrzeug um eines mit Stromabnehmer handelt. Als charakteristisches Fahrzeugmerkmal kann dabei ein bestimmter Fahrzeugteil, beispielsweise die äußeren Enden der Schleifleisten, oder eine besondere Fahrzeugmarkierung an einer vordefinierten Stelle auf dem Fahrzeug sein. Das charakteristische Fahrzeugmerkmal steht in jedem Fall in fester Lage zur Fahrzeugmitte im Bereich des Stromabnehmers, so dass durch die Auswertungseinrichtung aus der Bildposition des charakteristischen Fahrzeugmerkmals auf die Bildposition der Fahrzeugposition geschlossen werden kann. Aufgrund des Standortes und der Aufnahmerichtung der Videokamera kann aus Bildpunkten der Videobilder auf reale Positionen geschlossen werden, so dass aus einzelnen Videobildern die Fahrzeugpositionen zu den jeweiligen Aufnahmezeiten und aus einer Serie von Videobildern auch die Fahrtrichtung und Fahrgeschwindigkeit des Fahrzeugs ermittelt werden können.

Vorzugsweise ist die Videokamera des Videosystems dazu ausgebildet, aus einem aufgenommenen Videobild einen das charakteristische Fahrzeugmerkmal enthaltenden Bildausschnitt zu ermitteln und nur diesen der Auswertungseinrichtung zuzuführen. Dabei sind die Auswertungseinrichtung und eine Sendeeinrichtung zur Übertragung der ermittelten aktuellen Fahrzeugposition und/oder Fahrtrichtung an die fahrzeugseitige Empfangseinrichtung in einer Oberleitungszentrale angeordnet. Auf diese Weise braucht die Auswertungseinrichtung mit den Bildbearbeitungsmitteln nicht für jede einer Vielzahl an streckenseitigen Videokameras sondern nur einmal zentral angeschafft zu werden. Indem die Videokamera aus aufgenommenen Videobildern einen interessierenden, nicht mehr als das charakteristische Fahrzeugmerkmal enthaltenden Bildausschnitt bestimmt und nur diesen der Auswertungseinrichtung zuführt, wird die zu übertragende Bilddatenmenge erheblich reduziert. Dies spart Übertragungskosten für die Datenübertragung von den dezentral angeordneten Videokameras zu einer zentral angeordneten Auswertungseinrichtung. Außerdem erhöht es die Geschwindigkeit der Bildauswertung in der Auswertungseinrichtung, so dass die ermittelten Fahrzeugpositionen und Fahrtrichtungen ohne störende Zeitverzögerung aus der Oberleitungszentrale mittels der Sendeeinrichtung an die Empfangseinrichtung der fahrzeugseitigen Erfassungsmittel zu übertragen.

In einer bevorzugten Ausgestaltung des erfindungsgemäßen Fahrzeugs weist das Positionsbestimmungssystem einen Geschwindigkeitssensor zur Bestimmung einer aktuellen Fahrgeschwindigkeit und einen Richtungssensor zur Bestimmung der aktuellen Fahrtrichtung des Fahrzeugs aufweist. Dabei ist das Positionsbestimmungssystem dazu ausgebildet, ausgehend von einer bekannten Anfangsposition des Fahrzeugs aus einem zeitlichen Verlauf von Fahrgeschwindigkeit und Fahrtrichtung die aktuelle Fahrzeugposition zu ermitteln. Als Geschwindigkeitssensor können beispielsweise Radsensoren eingesetzt werden, während Gyrosensoren die Richtungsänderung des Fahrzeugs ermitteln. Bei bekannten Anfangsbedingungen für Fahrzeugposition und Fahrtrichtung kann auf der Grundlage einer Zeitmessung und der fortwährenden Erfassung von Fahrgeschwindigkeit und Änderung der Fahrtrichtung die aktuelle Fahrzeugposition und die aktuelle Fahrtrichtung des Fahrzeugs bestimmt werden. Die Genauigkeit dieser Positionsbestimmung nimmt mit zunehmender Entfernung vom Ort der bekannten Anfangsbedingungen ab und erfordert daher nach gewissen Streckenabschnitten einer Aktualisierung der Anfangsbedingungen.

In einer vorteilhaften Ausgestaltung des erfindungsgemäßen Fahrzeugs weisen die Erfassungsmittel Kontaktpositionssensoren zur Bestimmung der aktuellen Kontaktpositionen der Fahrdrähte an den Schleifleisten auf. Dabei sind die Erfassungsmittel dazu ausgebildet, aus den bestimmten Kontaktpositionen die aktuelle Relativlage des Fahrzeugs zu den Fahrdrähten zu ermitteln. Hierfür kommen beispielsweise elektromagnetische Sensoren in Betracht, etwa im Bereich der Schleifleisten angeordnete Magnetfeldsensoren, die die Stärke des von den stromdurchflossenen Fahrdrähten erzeugten Magnetfeldes messen. Alternativ oder zusätzlich können optische Sensoren, wie zum Beispiel Laserscanner, die die Position der Fahrdrähte mittels Laserstrahlung abtasten, eingesetzt werden. Aus der Anordnung der Sensoren am Fahrzeug kann jeweils auf die Relativlage der Fahrdrähte zum Fahrzeug geschlossen werden. Grundsätzlich kommt das erfindungsgemäße Fahrzeug ohne direkte Messung der Relativlage aus, so dass der Einsatz der einen oder anderen Kontaktpositionssensoren optional ist.

Vorzugsweise ist das Positionsbestimmungssystem des erfindungsgemäßen Fahrzeugs dazu ausgebildet, aus der erfassten Relativlage im Bereich eines Stützpunktes der Fahrdrähte die aktuelle Fahrzeugposition im Bereich des Stützpunktes zu ermitteln. Im Bereich von Stützpunkten, an denen die Fahrdrähte durch von Masten getragene Seitenhalter fixiert sind, sind die Fahrdrahtpositionen praktisch keinen witterungsbedingten Schwankungen ausgesetzt. Daher weisen die in der Datenbank gespeicherten Fahrdrahtpositionen in diesen Bereichen eine hohe Genauigkeit auf. Da aus der Datenbank die Positionen der Stützpunkte bekannt ist und da aufgrund der Wegstreckenmessung etwa über Radsensoren auch die von Fahrzeug zurückgelegte Wegstrecke bekannt ist, kann eine genaue Bestimmung der Fahrzeugposition an den Stützpunkten aus der dort gemessenen Relativlage erfolgen.

In einer bevorzugten Ausführungsform des erfindungsgemäßen Fahrzeugs weist das Positionsbestimmungssystem eine Empfangseinheit für ein Satelliten-gestütztes Positionssignal auf, das die aktuelle Fahrzeugposition repräsentiert. Mit im Laufe der künftigen Weiterentwicklung von globalen Satellitengestützten Navigationssystemen zunehmenden Genauigkeit der dadurch bereitgestellten Positionssignale nimmt auch die Genauigkeit der Bestimmung der Fahrzeugposition, aber auch Fahrgeschwindigkeit und Fahrtrichtung von mit entsprechenden Empfangseinheiten ausgestatteten Fahrzeugen zu.

In einer weiteren vorteilhaften Ausführungsform des erfindungsgemäßen Fahrzeugs weisen die Erfassungsmittel einen Windsensor zur Messung einer aktuellen Windgeschwindigkeit und/oder einen Temperatursensor zur Messung einer aktuellen Umgebungstemperatur auf, wobei in der Datenbank die Fahrdrahtpositionen in Abhängigkeit von Seitenwindgeschwindigkeit und/oder Umgebungstemperatur gespeichert sind. Die Oberleitungsanlage in Form eines aus Tragseilen, Hängern, Fahrdrähten und Beiseilen gebildeten Kettenwerks unterliegt zwischen zwei Stützpunkten einem Durchhang, der durch die Gewichtsverteilung und durch temperaturbedingte Längenänderungen der Leiterseile bestimmt ist. Dieser Durchhang führt bei Seitenwind zu einer gegenüber Normallage bei Windstille abweichenden Seitenlage, die mit wachsendem Abstand von den Stützpunkten zunimmt. Aufgrund der Konstruktion des Kettenwerks ist diese Seitenlage für unterschiedliche Seitenwindgeschwindigkeiten und Umgebungstemperaturen berechenbar und die Berechnungsergebnisse in Form von wind- und temperaturabhängigen Fahrdrahtpositionen in der Datenbank abgespeichert. Die Erfassung der aktuellen Relativlage gewinnt dadurch an Genauigkeit, wenn bei der Auswahl der Fahrdrahtpositionen die von den entsprechenden Sensoren gemessenen Windgeschwindigkeiten und Umgebungstemperaturen berücksichtigt werden. Bei der Bestimmung der Seitenwindgeschwindigkeit sind der geschwindigkeitsbedingte Fahrtwind sowie die aktuelle Fahrtrichtung zu berücksichtigen. In die Temperaturbetrachtung kann auch die lastbedingte Stromwärme in den Fahrdrähten berücksichtigt werden.

In einer weiteren bevorzugten Ausgestaltung des erfindungsgemäßen Fahrzeugs weisen die Erfassungsmittel Kommunikationsmittel zur drahtlosen Datenübertragung auf, die zur Aktualisierung der Datenbank durch geänderte Fahrdrahtposition einer umgebauten Oberleitungsanlage und durch zusätzliche Fahrdrahtpositionen einer neugebauten Oberleitungsanlage vorgesehen sind. Werden Oberleitungsanlagen um- oder neugebaut, können hierdurch die Fahrdrahtpositionen über die Oberleitungszentrale an alle nutzenden Fahrzeuge über drahtlose Kommunikationsmittel übertragen und dadurch die mitgeführten Datenbanken aktualisiert werden. Hierdurch ist gewährleistet, dass der Relativlagenerfassung stets die aktuelle Fahrdrahtposition zugrunde liegt.

In einer weiteren vorteilhaften Ausgestaltung des erfindungsgemäßen Fahrzeugs ist das Lenkassistenzsystem dazu ausgebildet, einen automatischen Lenkeingriff auszuführen, um ein Verlassen der Kontaktpositionen der Fahrdrähte aus dem Arbeitsbereich der Schleifleisten zu verhindern. Während der Fahrt verändern sich die Kontaktpositionen sowohl durch einen nicht spurgetreuen Fahrdrahtverlauf als auch durch Schwankungen in der Spurhaltung durch das manuelle Lenkverhalten des Fahrzeugführers. Solange sich die Kontaktpositionen gleichmäßig auf den Arbeitsbereich der Schleifleisten des Stromabnehmers verteilen, gibt dieses Verhalten keinen Anlass für einen automatischen Lenkeingriff durch das Lenkassistenzsystem. Erkennt jedoch das Lenkassistenzsystem, dass die ihm zugeführten Werte der Relativlage einen vordefinierbaren Grenzwert überschreiten, wirkt das Lenkassistenzsystem durch einen automatischen Lenkeingriff entgegen, um einen Kontaktverlust zwischen Stromabnehmer und Fahrdrähten zu verhindern.

In einer weiteren bevorzugten Ausführungsform des erfindungsgemäßen Fahrzeugs ist das Lenkassistenzsystem dazu ausgebildet, einen automatischen Lenkeingriff auszuführen, um einen über ihren Arbeitsbereich gleichmäßigen Verschleiß der Schleifleisten zu erzielen. Bei idealer Fahrspurhaltung und spurmittigem Fahrdrahtverlauf würden die Schleifleisten die Fahrdrähte stets an denselben Kontaktpositionen beschleifen, was einen unerwünschten punktuellen Verschleiß der Schleifleisten zur Folge hätte. Bei geradem Fahrspur- und spurgetreuem Fahrdrahtverlauf kann durch automatischen Lenkeingriff beispielsweise in Form einer leichten Schlangenlinie ein gleichmäßiger Verschleiß der Schleifleisten erreicht werden. Ebenso können Fahrabschnitte mit einseitigem Verschleiß etwa in Kurvenfahrten bewusst in Kauf genommen werden und der Verschleiß bei einfachen Fahrverhältnissen auf Geraden durch automatischen Lenkeingriff ausgeglichen werden.

In einer anderen vorteilhaften Ausführungsform des erfindungsgemäßen Fahrzeugs sind die Erfassungsmittel dazu ausgebildet, als Maß für den Verschleiß Kontaktzeiten für eine Reihe aneinander grenzender Arbeitssegmente der Schleifleisten, in die deren Arbeitsbereich unterteilt ist, zu messen und aufzusummieren. Durch eine Aufteilung des Arbeitsbereiches der Schleifleisten in eine Reihe gleich großer Arbeitssegmente kann die Gleichmäßigkeit des Verschleißes durch eine Messung der Kontaktzeit je Arbeitssegment bestimmt werden, wenn man vereinfachend annimmt, dass sich der Verschleiß an einem Kontaktpunkt proportional zur Kontaktzeit verhält.

Vorzugsweise weisen die Erfassungsmittel des erfindungsgemäßen Fahrzeugs einen Stromsensor zur Messung eines während des Schleifkontaktes zwischen Schleifleisten und Fahrdrähten fließenden elektrischen Stromes auf, wobei die Erfassungsmittel dazu ausgebildet sind, das Maß für den Verschleiß eines Arbeitssegments anhand eines vorab ermittelten Verschleißmodells, in welchem der Verschleiß eines Arbeitssegments in Abhängigkeit der während der Kontaktzeit gemessenen Stromstärke und/oder Umgebungstemperatur und/oder Windgeschwindigkeit angegeben ist, zu berechnen. Der Kohleverschleiß an einer Schleifleiste hängt neben der Zeitdauer des Schleifkontaktes auch von der Temperatur der Schleifleiste ab, die durch den fließenden Fahrstrom und die mechanische Gleitreibung erzeugt und durch Fahrt- und Umgebungswind und Umgebungstemperatur beeinflusst wird. Für eine gegebene Bauart einer Schleifleiste lässt sich der Verschleiß für ein Arbeitssegment experimentell bestimmen und in einem entsprechenden Verschleißmodell in den Erfassungsmitteln hinterlegen. Durch Messung von Stromstärke, Windgeschwindigkeit und Umgebungstemperatur mittels geeigneter Sensorik kann dann anhand des Verschleißmodells das Verschleißmaß für jedes Arbeitssegment der Schleifleisten berechnet werden.

In einer anderen bevorzugten Ausgestaltung des erfindungsgemäßen Fahrzeugs ist das Lenkassistenzsystem dazu ausgebildet, einen automatischen Lenkeingriff zu unterdrücken, wenn die erfasste Relativlage eine vordefinierte Rückführschwelle überschritten hat. Wird durch ein Lenkmanöver der oben genannte Grenzwert für die Relativlage, der im Allgemeinen einen automatischen Lenkeingriff auslöst, in kurzer Zeit bis über eine vordefinierte Rückführschwelle überschritten, so wird der automatische Lenkeingriff unterdrückt. Es wird dabei davon ausgegangen, dass es sich bei dem Lenkmanöver um eine Ausweichaktion oder um einen beabsichtigten Fahrspurwechsel handelt, welches nicht durch einen automatischen Lenkeingriff gestört werden soll.

In einer anderen vorteilhaften Ausgestaltung des erfindungsgemäßen Fahrzeugs ist das Lenkassistenzsystem dazu ausgebildet, einen automatischen Lenkeingriff zu unterdrücken, wenn ein manueller Lenkeingriff über ein Lenkrad erfolgt. Dadurch wird dem Sicherheitsgrundsatz genügt, dass die Manövrierfähigkeit eines Fahrzeugs durch den Fahrzeugführer stets Vorrang vor automatischem Lenken hat.

In einer anderen bevorzugten Ausführungsform des erfindungsgemäßen Fahrzeugs ist das Lenkassistenzsystem dazu ausgebildet, einen automatischen Lenkeingriff unter Einprägung eines einstellbaren Lenkmoments in das Lenkrad auszuführen, wobei das Lenkmoment automatisch bei Authentifizierung eines Fahrzeugführers auf einen dem Fahrzeugführer zugeordneten Wert einstellbar ist. Der Fahrzeugführer soll durch das eingeprägte Lenkmoment über das Lenkrad spüren können, wenn ein automatischer Lenkeingriff vonstatten geht. Will der Fahrzeugführer währenddessen einen manuellen Lenkeingriff durchführen, muss es dieses Lenkmoment am Lenkrad überwinden. Dieses Lenkmomentes ist daher spezifisch für jeden der Fahrzeugführer, die für eine Nutzung dieses Fahrzeugs vorgesehen sind, vorab individuell zu bestimmen und im Lenkassistenzsystem zu hinterlegen. Vor Fahrtbeginn muss ein Fahrzeugführer sich am Fahrzeug authentifizieren, wobei automatisch sein hinterlegter Wert für das Lenkmoment eingestellt wird.

In noch einer weiteren vorteilhaften Ausführungsform des erfindungsgemäßen Fahrzeugs sind die Erfassungsmittel dazu ausgebildet, anhand einer Mehrzahl an gleichzeitig erfassten Fahrzeugpositionen und/oder Relativlagen eine Plausibilitätsprüfung der aktuellen Relativlage auszuführen. Erfindungsgemäß kann das Positionsbestimmungssystem gleichzeitig Fahrzeugpositionen aus mehreren Sensorquellen bestimmen. Ebenso können Relativlagen gleichzeitig sowohl von den Erfassungsmitteln als auch von einem oder mehreren Kontaktpositionssensoren erfasst werden. Mehrfach vorhandene Werte können zur Plausibilitätsprüfung herangezogen werden, wobei die unterschiedlichen Verlässlichkeiten und Genauigkeiten der Werte zu berücksichtigen sind.

Vorzugsweise sind die Erfassungsmittel des erfindungsgemäßen Fahrzeugs dazu ausgebildet, bei einer Abweichung zwischen gleichzeitig erfassten Fahrzeugpositionen und/oder Relativlagen dem Lenkassistenzsystem einen aus diesen gebildeten Sollwert zuzuführen. Der zugeführte Sollwert kann als gewichteter Mittelwert der erfassten Einzelwerte angesehen werden, wobei genaue und verlässliche Werte ein hohes Gewicht erhalten, während unplausible Werte ein geringes Gewicht erhalten oder außer Betracht gelassen werden.

In noch einer weiteren bevorzugten Ausgestaltung des erfindungsgemäßen Fahrzeugs sind mit dem Stromabnehmer Aktormittel zum Verstellen der Schleifleisten quer zu einer Fahrzeuglängsachse gekoppelt, die von einer mit dem Lenkassistenzsystem verbundenen Steuereinrichtung derart angesteuert werden, dass die Wirkung eines automatisches Lenkeingriffs auf die Relativlage verstärkt wird. Wenngleich gemäß der Erfindung vorzugsweise auf einen seitlich nachführbaren Stromabnehmer verzichtet werden soll, da die Komplexität der erforderlichen Aktorik möglichst gering zu halten ist, kann ein derartiger Stromabnehmer die durch automatische Lenkeingriffe bewirkten Verschiebungen der Relativlage durchaus unterstützen. Dabei sorgt das Lenkassistenzsystem aber dafür, dass die Stellbewegungen des Stromabnehmers auf ein Mindestmaß beschränkt bleiben, wodurch die Aktormittel einfach ausgeführt werden können und trotzdem wenig störanfällig sind.

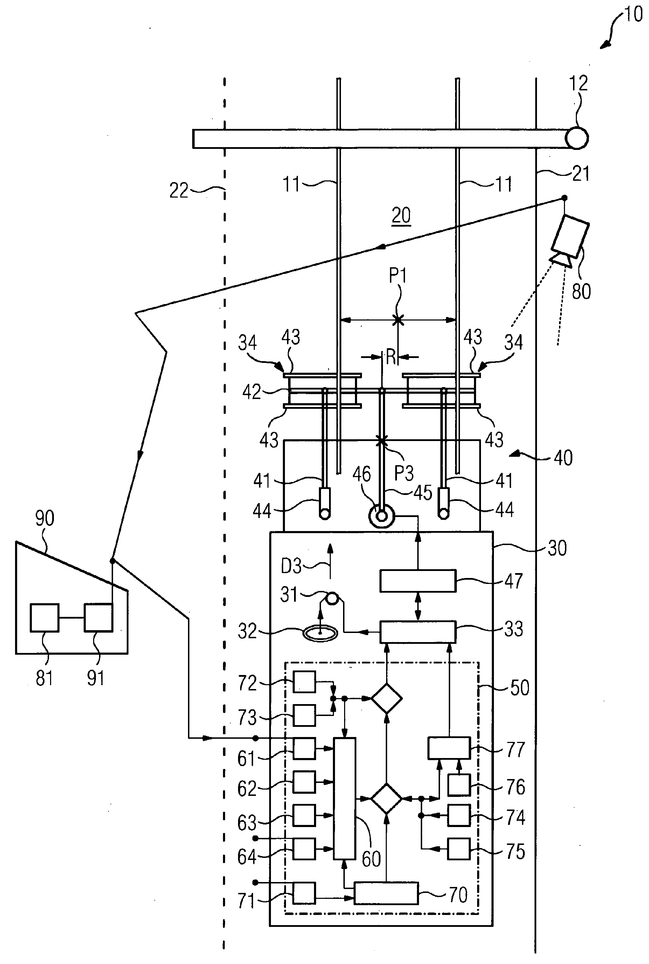

Weitere Eigenschaften und Vorteile der Erfindung ergeben sich aus nachfolgender Beschreibung einer konkreten Ausführungsform anhand der Zeichnung, in deren einziger Figur ein erfindungsgemäßes nicht schienengebundenes Fahrzeug schematisch veranschaulicht ist.

Gemäß der einzigen Figur ist eine zweipolige Oberleitungsanlage 10 mit zwei als Hin- und Rückleiter ausgebildeten Fahrdrähten 11, die parallel etwa mittig oberhalb einer Fahrspur 20 verlaufen und an Stützpunkten 12 fixiert sind. Diese derart elektrifizierte Fahrspur 20 kann zum Beispiel die rechte Fahrspur einer mehrspurigen Autobahn und rechts von einer durchgezogenen Fahrspurmarkierung 21 sowie links von einer unterbrochenen Fahrspurmarkierung 22 seitlich begrenzt sein. Stützpunkte 12 können durch Masten mit quer über die Fahrspur 20 ragenden Seitenauslegern gebildet sein, an denen nicht dargestellte Tragseile, Beiseile und Hänger für die Fahrdrähte 11 fixiert sind. Hierdurch ist es möglich, in ein Fahrzeug 30 - etwa ein schweres Nutzfahrzeug - mit einem Stromabnehmer 40 elektrische Energie einzuspeisen, um einem Elektro- oder Hybridantrieb des Fahrzeugs 30 Traktionsenergie bereitzustellen oder um Bremsenergie des Fahrzeugs 30 an die Oberleitungsanlage abzuführen.

Der Stromabnehmer 40 stützt sich über Kipp-Gelenke am Fahrzeug 30 ab, an welchen zwei Tragausleger 41 angelenkt sind. Die Ausleger 41 sind dabei um je eine horizontale Achse kippbar, so dass eine von den Tragauslegern 41 getragene Wippe 42 des Stromabnehmers 40 vertikal anheb- und absenkbar ist. Hierzu ist jeder Tragausleger 41 mit Hub- und Senkmitteln 44 gekoppelt, die die Ausleger 42 aufrichtet und die Wippe 42 mit einem definierten Druck gegen die Fahrdrähte 11 anhebt. Dann sind die Tragausleger 41 und gegebenenfalls der Stellausleger 45 nach vorne, also gegen die Fahrtrichtung D3 unter einem spitzen Winkel aufgestellt. Die Wippe 42 des Stromabnehmers 40 weist je Fahrdraht 11 zwei in Fahrtrichtung D3 hintereinander angeordnete Schleifleisten 43 auf. Die Schleifleisten 43 sind quer zur Fahrtrichtung D3 ausgerichtet und weisen einen zum Beschleifen des Fahrdrahtes 11 vorgesehenen Arbeitsbereich auf.

Die Tragausleger 41 und ein dazwischen angeordneter Stellausleger 45 können auch jeweils um eine vertikale Achse drehbar sein, so dass die Wippe 42 eine quer zur Fahrtrichtung D3 des Fahrzeugs 30 gerichtete Schwenkbewegung ausführen kann. Hierzu sind die Ausleger 41 und 45 am Fahrzeug 30 über Dreh-Kipp-Gelenke abgestützt. Die Schwenkbewegung wird durch als Stellantrieb ausgebildete Aktormittel 46 eingestellt, deren Drehbewegung vom Stellausleger 45 auf die Wippe 42 übertragen wird. Die Aktormittel 46 werden von einer Steuereinrichtung 47 durch Zuführung eines die auszuführende Stellbewegung repräsentierenden Steuersignals angesteuert.

Zur Erfassung der Relativlage R des Stromabnehmers 40 zu den Fahrdrähten 11 umfasst das Fahrzeug 30 Erfassungsmittel, die in ihrer Gesamtheit mit dem Bezugszeichen 50 bezeichnet sind und im Einzelnen ein Positionsbestimmungssystem 60 zur Bestimmung einer aktuellen Fahrzeugposition P3 des Fahrzeugs 30 auf der Fahrspur 20 und eine Datenbank 70 mit gespeicherten Fahrdrahtpositionen P1 der Fahrdrähte 11 entlang der Fahrspur 20 aufweisen. Die Erfassungsmittel 50 sind erfindungsgemäß dazu ausgebildet, die Relativlage R aus der aktuell bestimmten Fahrzeugposition P3 und aus den zugeordneten Fahrdrahtpositionen P1 zu berechnen. Die Fahrzeugposition P3 kann dabei beispielsweise als Ort der Fahrzeugmitte im Bereich des Stromabnehmers 40 angesehen werden. Die Fahrdrahtpositionen P1 am selben Messquerschnitt kann beispielsweise als Ort der Mittellinie zwischen den beiden Fahrdrähten 11 angenommen werden.

Das Positionsbestimmungssystem 60 weist eine Empfangseinrichtung 61 zum Empfang der von einem fahrzeugexternen Videosystem ermittelten Fahrzeugposition P3 auf. Das Videosystem weist eine Videokamera 80 zur Aufnahme von Videobildern eines auf der Fahrspur 20 fahrenden Fahrzeugs 30 und eine Auswertungseinrichtung 81 zur Bestimmung einer Bildposition eines charakteristischen Fahrzeugmerkmals 34 in einem Videobild auf. Die Auswertungseinrichtung 81 ist dazu ausgebildet, aus Standort und Aufnahmerichtung der Videokamera 80 sowie aus Aufnahmezeitpunkten und bestimmten Bildpositionen des charakteristischen Fahrzeugmerkmals 34 die aktuelle Fahrzeugposition P3 und/oder dessen Fahrtrichtung D3 zu ermitteln. Die Videokamera 80 ist dazu ausgebildet, aus einem aufgenommenen Videobild einen das charakteristische Fahrzeugmerkmal 34 enthaltenden Bildausschnitt zu ermitteln und nur diesen der Auswertungseinrichtung 81 zuzuführen. Dabei sind die Auswertungseinrichtung 81 und eine Sendeeinrichtung 91 zur Übertragung der ermittelten aktuellen Fahrzeugposition P3 und/oder Fahrtrichtung D3 an die fahrzeugseitige Empfangseinrichtung 61 in einer Oberleitungszentrale 90 angeordnet. Durch dieses Videosystem kann zum Beispiel mit Vorteil die Fahrzeugposition P3 im Bereich einer Einfahrt in die Fahrspur 20 ermittelt werden, um einem einfahrenden Fahrzeug 30 beim bevorstehenden Andrahtvorgang zu unterstützen. Aufgrund der Genauigkeit des Videosystems kann die Fahrzeugposition P3 hochpräzise bestimmt werden.

Das Positionsbestimmungssystem 60 ist dazu ausgebildet, ausgehend von einer bekannten Anfangsposition des Fahrzeugs 30 aus einem zeitlichen Verlauf von Fahrgeschwindigkeit und Fahrtrichtung D3 die aktuelle Fahrzeugposition P3 zu ermitteln. Hierzu weist Positionsbestimmungssystem 60 einen Geschwindigkeitssensor 62 zur Bestimmung einer aktuellen Fahrgeschwindigkeit, beispielsweise einen Radsensor, und einen Richtungssensor 63 zur Bestimmung der aktuellen Fahrtrichtung D3 des Fahrzeugs 30, beispielsweise einen Gyrosensor, auf.

Zusätzlich oder alternativ ist das Positionsbestimmungssystem 60 dazu ausgebildet, aus einer direkt erfassten Relativlage R im Bereich des Stützpunktes 12 der Fahrdrähte 11 die aktuelle Fahrzeugposition P3 im Bereich des Stützpunktes 12 zu ermitteln. Hierzu weisen die Erfassungsmittel 50 Kontaktpositionssensoren 72, beispielsweise induktive Magnetfeldsensoren, und/oder Kontaktpositionssensoren 73, beispielsweise Laserscanner, jeweils zur Bestimmung der aktuellen Kontaktpositionen der Fahrdrähte 11 an den Schleifleisten 43 auf. Die Erfassungsmittel 50 sind dazu ausgebildet, aus den bestimmten Kontaktpositionen die aktuelle Relativlage R des Fahrzeugs 30 zu den Fahrdrähten 11 zu ermitteln.

Zusätzlich kann das Positionsbestimmungssystem 60 eine Empfangseinheit 64 für ein Satelliten-gestütztes Positionssignal aufweisen, das die aktuelle Fahrzeugposition P3 repräsentiert. Hier kommen Empfänger der globalen Satellitengestützten Navigationssysteme GPS, GLONASS oder GALILEO in Betracht, sofern deren Genauigkeit in den Bereich von Dezimetern kommt.

Die Erfassungsmittel 50 weisen einen Windsensor 74 zur Messung einer aktuellen Windgeschwindigkeit und einen Temperatursensor 75 zur Messung einer aktuellen Umgebungstemperatur auf. Diese Messwerte dienen als Eingangsgrößen für die Datenbank 70, in der die Fahrdrahtpositionen P1 in Abhängigkeit von Seitenwindgeschwindigkeit und Umgebungstemperatur gespeichert sind. Hierdurch erhöht sich die Genauigkeit der Fahrdrahtpositionen. Zur Aktualisierung der Datenbank 70 durch geänderte Fahrdrahtposition P1 einer umgebauten Oberleitungsanlage 10 und durch zusätzliche Fahrdrahtpositionen P1 einer neugebauten Oberleitungsanlage 10 weisen die Erfassungsmittel 50 Kommunikationsmittel 71 zur drahtlosen Datenübertragung auf, die vorzugsweise nach einem der Mobilfunkstandards GPRS/EDGE, UMTS, HSDPA oder auch LTE.

Das Fahrzeug 30 umfasst ein Lenkassistenzsystem 33 zur automatischen Lenkung des Fahrzeugs 30 in Abhängigkeit der erfassten Relativlage R. Hierzu wird dem Lenkmotor 31 der Fahrzeuglenkung, auf den auch manuell über das Lenkrad 32 eingewirkt wird, ein Stellsignal zugeführt. Das Lenkassistenzsystem 33 ist dazu ausgebildet, einen automatischen Lenkeingriff auszuführen, um ein Verlassen der Kontaktpositionen der Fahrdrähte 11 aus dem Arbeitsbereich der Schleifleisten 43 zu verhindern. Zusätzlich führt es einen automatischen Lenkeingriff aus, um einen über ihren Arbeitsbereich gleichmäßigen Verschleiß der Schleifleisten 43 zu erzielen.

Hierzu sind die Erfassungsmittel 50 dazu ausgebildet, als Maß für den Verschleiß Kontaktzeiten für eine Reihe aneinander grenzender Arbeitssegmente der Schleifleisten 43, in die deren Arbeitsbereich unterteilt ist, zu messen und aufzusummieren. Die Erfassungsmittel 50 weisen ferner einen Stromsensor 76 zur Messung eines während des Schleifkontaktes zwischen Schleifleisten 43 und Fahrdrähten 11 fließenden elektrischen Stromes auf. Die Erfassungsmittel 50 dazu ausgebildet, das Maß für den Verschleiß eines Arbeitssegments anhand eines vorab ermittelten Verschleißmodells 77, in welchem der Verschleiß eines Arbeitssegments in Abhängigkeit der während der Kontaktzeit gemessenen Stromstärke und/oder Umgebungstemperatur und/oder Windgeschwindigkeit angegeben ist, zu berechnen.

Das Lenkassistenzsystem 33 ist dazu ausgebildet, einen automatischen Lenkeingriff zu unterdrücken, wenn die erfasste Relativlage R eine vordefinierte Rückführschwelle überschritten hat oder ein manueller Lenkeingriff über ein Lenkrad 32 erfolgt. Ein automatischer Lenkeingriff wird dabei unter Einprägung eines einstellbaren Lenkmoments in das Lenkrad 31 ausgeführt, wobei das Lenkmoment automatisch bei Authentifizierung eines Fahrzeugführers auf einen dem Fahrzeugführer zugeordneten Wert einstellbar ist.

Die Erfassungsmittel 50 sind dazu ausgebildet, anhand einer Mehrzahl an gleichzeitig erfassten Fahrzeugpositionen P3 und/oder Relativlagen R eine Plausibilitätsprüfung der aktuellen Relativlage R auszuführen und bei einer Abweichung zwischen gleichzeitig erfassten Fahrzeugpositionen P3 und/oder Relativlagen R dem Lenkassistenzsystem 33 einen aus diesen gebildeten Sollwert zuzuführen.

Im Fall, dass der Stromabnehmer 40 mit Aktormitteln 46 zum Verstellen der Schleifleisten 43 quer zu einer Fahrzeuglängsachse gekoppelt ist, werden diese von einer mit dem Lenkassistenzsystem 3 verbundenen Steuereinrichtung 47 derart angesteuert, dass die Wirkung eines automatisches Lenkeingriffs auf die Relativlage R verstärkt wird.

## Patentansprüche

1. Nicht schienengebundenes Fahrzeug (30), insbesondere Lastkraftwagen oder Bus, umfassend einen Stromabnehmer (40) zur Einspeisung elektrischer Energie aus einer entlang einer Fahrspur (20) angeordneten, zweipoligen Oberleitungsanlage (10) mit als Hin- und Rückleiter ausgebildeten Fahrdrähten (11), wobei der Stromabnehmer (40) je Fahrdraht (11) mindestens eine Schleifleiste (43) mit einem Arbeitsbereich zur Kontaktierung der Fahrdrähte (11) aufweist, Erfassungsmittel (50) zur Erfassung der Relativlage (R) des Stromabnehmers (40) zu den Fahrdrähten (11) und ein Lenkassistenzsystem (33) zur automatischen Lenkung des Fahrzeugs (30) in Abhängigkeit der erfassten Relativlage (R),
**dadurch gekennzeichnet, dass** die Erfassungsmittel (50) ein Positionsbestimmungssystem (60) zur Bestimmung einer aktuellen Fahrzeugposition (P3) des Fahrzeugs (30) auf der Fahrspur (20) und eine Datenbank (70) mit gespeicherten Fahrdrahtpositionen (P1) der Fahrdrähte (11) entlang der Fahrspur (20) aufweisen und dass die Erfassungsmittel (50) dazu ausgebildet sind, die Relativlage (R) aus der aktuell bestimmten Fahrzeugposition (P3) und aus den zugeordneten Fahrdrahtpositionen (P1) zu berechnen, wobei das Positionsbestimmungssystem (60) eine Empfangseinrichtung (61) zum Empfang der von einem fahrzeugexternen Videosystem ermittelten Fahrzeugposition (P3) aufweist, wobei das Videosystem eine Videokamera (80) zur Aufnahme von Videobildern eines auf der Fahrspur (20) fahrenden Fahrzeugs (30) und eine Auswertungseinrichtung (81) zur Bestimmung einer Bildposition eines charakteristischen Fahrzeugmerkmals (34) in einem Videobild aufweist, und wobei die Auswertungseinrichtung (81) dazu ausgebildet ist, aus Standort und Aufnahmerichtung der Videokamera (80) sowie aus Aufnahmezeitpunkten und bestimmten Bildpositionen des charakteristischen Fahrzeugmerkmals (34) die aktuelle Fahrzeugposition (P3) und/oder dessen Fahrtrichtung (D3) zu ermitteln.

2. Fahrzeug (30) nach Anspruch 1, wobei die Videokamera (80) dazu ausgebildet ist, aus einem aufgenommenen Videobild einen das charakteristische Fahrzeugmerkmal (34) enthaltenden Bildausschnitt zu ermitteln und nur diesen der Auswertungseinrichtung (81) zuzuführen, wobei die Auswertungseinrichtung (81) und eine Sendeeinrichtung (91) zur Übertragung der ermittelten aktuellen Fahrzeugposition (P3) und/oder Fahrtrichtung (D3) an die fahrzeugseitige Empfangseinrichtung (61) in einer Oberleitungszentrale (90) angeordnet sind.

3. Fahrzeug (30) nach Anspruch 1 oder 2, wobei das Positionsbestimmungssystem (60) einen Geschwindigkeitssensor (62) zur Bestimmung einer aktuellen Fahrgeschwindigkeit und einen Richtungssensor (63) zur Bestimmung der aktuellen Fahrtrichtung (D3) des Fahrzeugs (30) aufweist, wobei das Positionsbestimmungssystem (60) dazu ausgebildet ist, ausgehend von einer bekannten Anfangsposition des Fahrzeugs (30) aus einem zeitlichen Verlauf von Fahrgeschwindigkeit und Fahrtrichtung (D3) die aktuelle Fahrzeugposition (P3) zu ermitteln.

4. Fahrzeug (30) nach einem der Ansprüche 1 bis 3, wobei die Erfassungsmittel (50) Kontaktpositionssensoren (72, 73) zur Bestimmung der aktuellen Kontaktpositionen der Fahrdrähte (11) an den Schleifleisten (43) aufweisen, und wobei die Erfassungsmittel (50) dazu ausgebildet sind, aus den bestimmten Kontaktpositionen die aktuelle Relativlage (R) des Fahrzeugs (30) zu den Fahrdrähten (11) zu ermitteln.

5. Fahrzeug (30) nach Anspruch 4, wobei das Positionsbestimmungssystem (60) dazu ausgebildet ist, aus der erfassten Relativlage (R) im Bereich eines Stützpunktes (12) der Fahrdrähte (11) die aktuelle Fahrzeugposition (P3) im Bereich des Stützpunktes (12) zu ermitteln.

6. Fahrzeug (30) nach einem der Ansprüche 1 bis 5, wobei das Positionsbestimmungssystem (60) eine Empfangseinheit (64) für ein Satelliten-gestütztes Positionssignal aufweist, das die aktuelle Fahrzeugposition (P3) repräsentiert.

7. Fahrzeug (30) nach einem der Ansprüche 1 bis 6, wobei die Erfassungsmittel (50) einen Windsensor (74) zur Messung einer aktuellen Windgeschwindigkeit und/oder einen Temperatursensor (75) zur Messung einer aktuellen Umgebungstemperatur aufweisen, wobei in der Datenbank (70) die Fahrdrahtpositionen (P1) in Abhängigkeit von Seitenwindgeschwindigkeit und/oder Umgebungstemperatur gespeichert sind.

8. Fahrzeug (30) nach einem der Ansprüche 1 bis 7, wobei die Erfassungsmittel (50) Kommunikationsmittel (71) zur drahtlosen Datenübertragung aufweisen, die zur Aktualisierung der Datenbank (70) durch geänderte Fahrdrahtposition (P1) einer umgebauten Oberleitungsanlage (10) und durch zusätzliche Fahrdrahtpositionen (P1) einer neugebauten Oberleitungsanlage (10) vorgesehen sind.

9. Fahrzeug (30) nach einem der Ansprüche 1 bis 8, wobei das Lenkassistenzsystem (33) dazu ausgebildet ist, einen automatischen Lenkeingriff auszuführen, um ein Verlassen der Kontaktpositionen der Fahrdrähte (11) aus dem Arbeitsbereich der Schleifleisten (43) zu verhindern.

10. Fahrzeug (30) nach einem der Ansprüche 1 bis 9, wobei das Lenkassistenzsystem (33) dazu ausgebildet ist, einen automatischen Lenkeingriff auszuführen, um einen über ihren Arbeitsbereich gleichmäßigen Verschleiß der Schleifleisten (43) zu erzielen.

11. Fahrzeug (30) nach einem der Ansprüche 1 bis 10, wobei die Erfassungsmittel (50) dazu ausgebildet sind, als Maß für den Verschleiß Kontaktzeiten für eine Reihe aneinander grenzender Arbeitssegmente der Schleifleisten (43), in die deren Arbeitsbereich unterteilt ist, zu messen und aufzusummieren.

12. Fahrzeug (30) nach Anspruch 11, wobei die Erfassungsmittel (50) einen Stromsensor (76) zur Messung eines während des Schleifkontaktes zwischen Schleifleisten (43) und Fahrdrähten (11) fließenden elektrischen Stromes aufweisen, und wobei die Erfassungsmittel (50) dazu ausgebildet sind, das Maß für den Verschleiß eines Arbeitssegments anhand eines vorab ermittelten Verschleißmodells (77), in welchem der Verschleiß eines Arbeitssegments in Abhängigkeit der während der Kontaktzeit gemessenen Stromstärke und/oder Umgebungstemperatur und/oder Windgeschwindigkeit angegeben ist, zu berechnen.

13. Fahrzeug (30) nach einem der Ansprüche 10 bis 12, wobei das Lenkassistenzsystem (33) dazu ausgebildet ist, einen automatischen Lenkeingriff zu unterdrücken, wenn die erfasste Relativlage (R) eine vordefinierte Rückführschwelle überschritten hat.

14. Fahrzeug (30) nach einem der Ansprüche 10 bis 13, wobei das Lenkassistenzsystem (33) dazu ausgebildet ist, einen automatischen Lenkeingriff zu unterdrücken, wenn ein manueller Lenkeingriff über ein Lenkrad (32) erfolgt.

15. Fahrzeug (30) nach einem der Ansprüche 10 bis 14, wobei das Lenkassistenzsystem (33) dazu ausgebildet ist, einen automatischen Lenkeingriff unter Einprägung eines einstellbaren Lenkmoments in das Lenkrad (31) auszuführen, wobei das Lenkmoment automatisch bei Authentifizierung eines Fahrzeugführers auf einen dem Fahrzeugführer zugeordneten Wert einstellbar ist.

16. Fahrzeug (30) nach einem der Ansprüche 1 bis 15, wobei die Erfassungsmittel (50) dazu ausgebildet sind, anhand einer Mehrzahl an gleichzeitig erfassten Fahrzeugpositionen (P3) und/oder Relativlagen (R) eine Plausibilitätsprüfung der aktuellen Relativlage (R) auszuführen.

17. Fahrzeug (30) nach Anspruch 16, wobei die Erfassungsmittel (50) dazu ausgebildet sind, bei einer Abweichung zwischen gleichzeitig erfassten Fahrzeugpositionen (P3) und/oder Relativlagen (R) dem Lenkassistenzsystem (33) einen aus diesen gebildeten Sollwert zuzuführen.

18. Fahrzeug (30) nach einem der Ansprüche 1 bis 17, wobei mit dem Stromabnehmer (40) Aktormittel (46) zum Verstellen der Schleifleisten (43) quer zu einer Fahrzeuglängsachse gekoppelt sind, die von einer mit dem Lenkassistenzsystem (3) verbundenen Steuereinrichtung (47) derart angesteuert werden, dass die Wirkung eines automatisches Lenkeingriffs auf die Relativlage (R) verstärkt wird.

## Claims

1. Non-rail-bound vehicle (30), in particular a lorry or bus, comprising a current collector (40) for injecting electrical energy from a two-pole overhead line system (10) arranged along a traffic lane (20), with contact wires (11) embodied as go-and-return lines, wherein the current collector (40) has at least one collector strip (43) per contact wire (11), with a working area for contacting the contact wires (11), detection means (50) for detecting the relative position (R) of the current collector (40) to the contact wires (11) and a steering assistance system (33) for automatically steering the vehicle (30) as a function of the detected relative position (R),
**characterised in that** the detection means (50) comprise a position determination system (60) for determining a current vehicle position (P3) of the vehicle (30) in the traffic lane (20) and a database (70) containing stored contact wire positions (P1) of the contact wires (11) along the traffic lane (20), and **in that** the detection means (50) are designed to calculate the relative position (R) from the currently determined vehicle position (P3) and from the associated contact wire position (P1), wherein the position determination system (60) has a receiving device (61) for receiving the vehicle position (P3) determined by a video system external to the vehicle, wherein the video system comprises a video camera (80) for recording video images of a vehicle (30) travelling in the traffic lane (20) and an evaluation device (81) for determining an image position of a characteristic vehicle feature (34) in a video image, and wherein the evaluation device (81) is designed to determine the current vehicle position (P3) and/or its direction of travel (D3) from the location and recording direction of the video camera (80) and from recording times and certain image positions of the characteristic vehicle feature (34).

2. Vehicle (30) according to claim 1, wherein the video camera (80) is designed to determine from a recorded video image an image section containing the characteristic vehicle feature (34) and to supply only this to the evaluation device (81), wherein the evaluation device (81) and a transmitting device (91) for transmitting the determined current vehicle position (P3) and/or direction of travel (D3) to the receiving device (61) on board the vehicle are arranged in an overhead wire control centre (90).

3. Vehicle (30) according to claim 1 or 2, wherein the position determination system (60) comprises a speed sensor (62) for determining a current speed of travel and a direction sensor (63) for determining the current direction of travel (D3) of the vehicle (30), wherein the position determination system (60) is designed to determine, starting from a known initial position of the vehicle (30), the current vehicle position (P3) from a time characteristic of vehicle speed and direction of travel (D3).

4. Vehicle (30) according to one of claims 1 to 3, wherein the detection means (50) have contact position sensors (72, 73) for determining the current contact positions of the contact wires (11) on the collector strips (43), and wherein the detection means (50) are designed to determine, from the specific contact positions, the current relative position (R) of the vehicle (30) to the contact wires (11).

5. Vehicle (30) according to claim 4, wherein the position determination system (60) is designed to determine, from the detected relative position (R) in the region of a support point (12) of the contact wires (11), the current vehicle position (P3) in the region of the support point (12).

6. Vehicle (30) according to one of claims 1 to 5, wherein the position determination system (60) comprises a receiving unit (64) for a satellite-aided position signal which represents the current vehicle position (P3).

7. Vehicle (30) according to one of claims 1 to 6, wherein the detection means (50) have a wind sensor (74) for measuring a current wind speed and/or a temperature sensor (75) for measuring a current ambient temperature, wherein the contact wire positions (P1) are stored in the database (70) as a function of cross-wind speed and/or ambient temperature.

8. Vehicle (30) according to one of claims 1 to 7, wherein the detection means (50) have communication means (71) for wireless data transmission which are provided for updating the database (70) by a changed contact wire position (P1) of a remodelled overhead line system (10) and by additional contact wire positions (P1) of a newly constructed overhead line system (10).

9. Vehicle (30) according to one of claims 1 to 8, wherein the steering assistance system (33) is designed to execute an automatic steering intervention in order to prevent the contact positions of the contact wires (11) from leaving the working area of the collector strips (43).

10. Vehicle (30) according to one of claims 1 to 9, wherein the steering assistance system (33) is designed to execute an automatic steering intervention in order to achieve wear of the collector strips (43) which is uniform across their working area.

11. Vehicle (30) according to one of claims 1 to 10, wherein the detection means (50) are designed to measure and add up, as a measure of the wear, contact times for a series of mutually adjoining working segments of the collector strips (43), into which their working area is subdivided.

12. Vehicle (30) according to claim 11, wherein the detection means (50) comprise a current sensor (76) for measuring an electric current flowing during the sliding contact between collector strips (43) and contact wires (11), and wherein the detection means (50) are designed to calculate the measure of the wear of a working segment based on a previously determined wear model (77), in which the wear of a working segment is specified as a function of the current strength and/or ambient temperature and/or wind speed measured during the contact time.

13. Vehicle (30) according to one of claims 10 to 12, wherein the steering assistance system (33) is designed to suppress an automatic steering intervention if the detected relative position (R) has exceeded a predefined feedback threshold.

14. Vehicle (30) according to one of claims 10 to 13, wherein the steering assistance system (33) is designed to suppress an automatic steering intervention if a manual steering intervention is effected using a steering wheel (32).

15. Vehicle (30) according to one of claims 10 to 14, wherein the steering assistance system (33) is designed to execute an automatic steering intervention on application of an adjustable steering torque to the steering wheel (31), wherein upon authentication of a vehicle driver the steering torque can be adjusted automatically to a value associated with the vehicle driver.

16. Vehicle (30) according to one of claims 1 to 15, wherein the detection means (50) are designed to execute a plausibility check on the current relative position (R) based on a plurality of simultaneously detected vehicle positions (P3) and/or relative positions (R).

17. Vehicle (30) according to claim 16, wherein the detection means (50) are designed, in the event of a deviation between simultaneously detected vehicle positions (P3) and/or relative positions (R), to supply the steering assistance system (33) with a reference value formed therefrom.

18. Vehicle (30) according to one of claims 1 to 17, wherein actuator means (46) for moving the contact strips (43) are coupled to the current collector (40) transversely to a vehicle longitudinal axis, and are actuated by a control device (47) connected to the steering assistance system (3) such that the effect of an automatic steering intervention on the relative position (R) is increased.

## Revendications

1. Véhicule ( 30 ) non guidé, notamment camion ou autobus, comprenant un appareil ( 40 ) de prise de courant pour injecter de l'énergie électrique d'une installation ( 10 ) bipolaire à ligne de contact disposée le long d'une voie ( 20 ) de circulation et ayant des fils ( 11 ) de contact constitués en conducteur allant et en conducteur venant, l'appareil ( 40 ) de prise de courant ayant par fil ( 11 ) de contact au moins une plaque ( 43 ) d'usure ayant une plage de travail pour la mise en contact des fils ( 11 ) de contact, des moyens ( 50 ) de détection de la position ( R ) relative de l'appareil ( 40 ) de prise de courant par rapport aux fils ( 11 ) de contact et un système ( 33 ) d'assistance à la conduite pour la conduite automatique du véhicule ( 30 ) en fonction de la position ( R ) relative détectée,
**caractérisé en ce que** les moyens ( 50 ) de détection ont un système ( 60 ) de détermination de position pour déterminer une position ( P3 ) présente du véhicule ( 30 ) sur la voie ( 20 ) de circulation et une base ( 70 ) de données dans laquelle des positions ( P1 ) des fils ( 11 ) de contact le long de la voie ( 20 ) de circulation sont mémorisées et **en ce que** les moyens ( 50 ) de détection sont constitués de manière à calculer la position ( R ) relative à partir de la position ( P3 ) déterminée présentement du véhicule et à partir des positions ( P1 ) associées de fil de contact, le système ( 60 ) de détermination de position ayant un dispositif ( 61 ) de réception de la position ( P3 ) du véhicule déterminée par un système vidéo extérieur au véhicule, le système vidéo ayant une caméra ( 80 ) vidéo pour l'enregistrement d'images vidéo d'un véhicule ( 30 ) circulant sur la voie ( 20 ) de circulation et un dispositif ( 81 ) d'exploitation pour la détermination d'une position d'image d'un signe ( 34 ) caractéristique du véhicule dans une image vidéo, le dispositif ( 81 ) d'exploitation étant constitué pour déterminer la position ( P3 ) présente du véhicule et/ou son sens ( D3 ) de déplacement à partir de l'emplacement et de la direction de prise de vue de la caméra ( 80 ) vidéo, ainsi que des instants de prise de vue et de positions d'image déterminées du signe ( 34 ) caractéristique du véhicule.

2. Véhicule ( 30 ) suivant la revendication 1, dans lequel la caméra ( 80 ) vidéo est constituée pour déterminer, à partir d'une image vidéo enregistrée, une partie de l'image contenant un signe ( 34 ) caractéristique du véhicule et n'envoyer que celui-ci au dispositif ( 81 ) d'exploitation, le dispositif ( 81 ) d'exploitation et un dispositif ( 91 ) d'émission pour la transmission de la position ( P3 ) présente du véhicule qui a été déterminée et/ou du sens ( D3 ) de marche au dispositif ( 61 ) de réception du côté du véhicule sont montés dans une centrale ( 90 ) à lignes de contact.

3. Véhicule ( 30 ) suivant la revendication 1 ou 2, dans lequel le système ( 60 ) de détermination de position comporte un capteur ( 62 ) de vitesse pour la détermination d'une vitesse de déplacement présente et un capteur ( 60 ) de sens pour la détermination du sens ( D3 ) de marche présent du véhicule ( 30 ), le système ( 60 ) de détermination de position étant constitué pour déterminer la position ( P3 ) présente du véhicule à partir d'une position initiale connue du véhicule ( 30 ) dans une courbe en fonction du temps de la vitesse de déplacement et du sens ( D3 ) de marche.

4. Véhicule ( 30 ) suivant l'une des revendications 1 à 3, dans lequel les moyens ( 50 ) de détection ont des capteurs ( 72, 73 ) de position de contact pour la détermination des positions présentes de contact des fils ( 11 ) de contact sur la plaque ( 43 ) d'usure, les moyens ( 50 ) de détection étant constitués pour déterminer, à partir des positions de contact déterminées, la position ( R ) relative présente du véhicule ( 11 ) par rapport aux fils ( 11 ) de contact.

5. Véhicule ( 30 ) suivant la revendication 4, dans lequel le système ( 60 ) de détermination de position est constitué pour déterminer, à partir de la position ( R ) relative détectée dans la zone d'un point ( 12 ) d'appui des fils ( 11 ) de contact, la position ( P3 ) présente du véhicule dans la zone du point ( 12 ) d'appui.

6. Véhicule ( 30 ) suivant l'une des revendications 1 à 5, dans lequel le système ( 60 ) de détermination de position a une unité ( 64 ) de réception d'un signal de position assisté par satellite, qui représente la position ( P3 ) présente du véhicule.

7. Véhicule ( 30 ) suivant l'une des revendications 1 à 6, dans lequel les moyens ( 50 ) de détection ont un anémomètre ( 74 ) de mesure d'une vitesse présente et/ou un capteur ( 75 ) de température de mesure d'une température ambiante présente, dans lequel il est mémorisé dans la base ( 70 ) de données les positions ( P1 ) des fils de contact en fonction de la vitesse du vent latéral et/ou de la température ambiante.

8. Véhicule ( 30 ) suivant l'une des revendications 1 à 7, dans lequel les moyens ( 50 ) de détection ont des moyens ( 71 ) de communication pour la transmission sans fil de données, qui sont prévues pour la mise à jour de la base ( 70 ) de données, par une modification de la position ( P1 ) des fils de contact d'une installation ( 10 ) à lignes de contact remaniée et par des positions ( P1 ) supplémentaires de fils de contact d'une installation ( 10 ) à fils de contact nouvelle.

9. Véhicule ( 30 ) suivant l'une des revendications 1 à 8, dans lequel le système ( 33 ) d'assistance à la conduite est constitué pour exécuter une intervention automatique de conduite afin d'empêcher que les positions de contact des fils ( 11 ) de contact quittent la zone de travail de la plaque ( 43 ) d'usure.

10. Véhicule ( 30 ) suivant l'une des revendications 1 à 9, dans lequel le système ( 33 ) d'assistance à la conduite est constitué pour exécuter une intervention automatique à la conduite afin d'obtenir une usure uniforme sur toute la plage de travail de la plaque ( 43 ) d'usure.

11. Véhicule ( 30 ) suivant l'une des revendications 1 à 10, dans lequel les moyens ( 50 ) de détection sont constitués pour mesurer et sommer comme mesure de l'usure des temps de contact pour une série de segments de travail voisins les uns des autres de la plaque ( 43 ) d'usure, dont la zone de travail est subdivisée.

12. Véhicule ( 30 ) suivant la revendication 11, dans lequel les moyens ( 50 ) de détection ont un capteur ( 76 ) de courant pour mesurer un courant électrique passant pendant le contact d'usure entre des plaques ( 43 ) d'usure et des fils ( 11 ) de contact, et dans lequel les moyens ( 50 ) de détection sont constitués pour calculer la valeur de l'usure d'un segment de travail à l'aide d'un modèle ( 77 ) d'usure déterminé à l'avance, dans lequel l'usure d'un segment de travail est indiquée en fonction de l'intensité du courant mesurée pendant un temps de contact et/ou de la température ambiante et/ou de la vitesse du vent.

13. Véhicule ( 30 ) suivant l'une des revendications 10 à 12, dans lequel le système ( 33 ) d'assistance à la conduite est constitué pour supprimer une intervention automatique de conduite si la position ( R ) relative a dépassé un seuil de retour défini à l'avance.

14. Véhicule ( 30 ) suivant l'une des revendications 10 à 13, dans lequel le système ( 33 ) d'assistance à la conduite est constitué pour supprimer une intervention automatique à la conduite si une intervention manuelle à la conduite s'effectue par un volant ( 32 ).

15. Véhicule ( 30 ) suivant l'une des revendications 10 à 14, dans lequel le système ( 33 ) d'assistance à la conduite est constitué pour exécuter une intervention automatique à la conduite, en imprimant un couple de conduite réglable au volant ( 31 ), le couple de conduite étant réglable automatiquement sur une valeur associée au conducteur du véhicule lorsqu'un conducteur du véhicule est authentifié.

16. Véhicule ( 30 ) suivant l'une des revendications 1 à 15, dans lequel les moyens ( 50 ) de détection sont constitués pour exécuter, à l'aide d'une multiplicité de positions ( P3 ) de véhicule et/ou de positions ( R ) relatives détectées en même temps, un contrôle de vraisemblance de la position ( R ) relative présente.

17. Véhicule ( 30 ) suivant la revendication 16, dans lequel les moyens ( 50 ) de détection sont constitués pour, s'il se produit un écart entre des positions ( P3 ) du véhicule et/ou des positions ( R ) détectées en même temps au système ( 33 ) d'assistance à la conduite, envoyer une valeur de consignes formée à partir de celles-ci.

18. Véhicule ( 30 ) suivant l'une des revendications 1 à 17, dans lequel à l'appareil ( 40 ) de prise de courant sont couplés des moyens ( 46 ) d'actionneur pour déplacer les plaques ( 43 ) d'usure transversalement à un axe longitudinal du véhicule, moyens qui sont commandés par un dispositif ( 47 ) de commande relié au système ( 3 ) d'assistance à la conduite de manière à renforcer l'effet sur la position ( R ) relative d'une intervention automatique à la conduite.
